# EUROPEAN PATENT APPLICATION

(11) **EP 4 485 971 A1**
(43) Date of publication of application: **01.01.2025**
(21) Application number: 23182651.2
(22) Date of filing: 30.06.2023
(51) Int. Cl.: H04R 3/02, H04M 3/56, H04M 9/08, H04R 27/00

(54) **A CONFERENCE SYSTEM WITH REDUCED ACCOUSTIC FEEDBACK**

(71) Applicant: Televic Conference NV, 8870 Izegem (BE)
(72) Inventor: Van Parys, Hans, 8200 Sint-Andries Brugge (BE)
(74) Representative: IP HILLS NV

(57) **Abstract**

A conference system (400) comprises a central server (401), a plurality of conference units (411, 412, 413; 511), each having a microphone (421, 422, 423) and a loudspeaker (431, 432, 433), and a network (103) coupling the conference units (411, 412, 413; 511) to the central server (401). The central server (401) generates a mix signal (450) comprising contributions of speaker signals (441, 443) from a subset of conference units (411, 413) with open microphones (421, 423), and downstream transmits the mix signal (450) to the conference units (411, 412, 413). At least one conference unit (411, 413) is configured to subtract from the received mix signal (451, 453) an estimated contribution of its own speaker signal (441, 443) to thereby generate a loudspeaker signal (471, 473) comprising contributions of speaker signals (441, 443; 541) from the subset of conference units (411, 413) minus itself for output by its loudspeaker (431, 433).

## Description

### Field of the Invention

The present invention generally relates to a conference system as used in a conference room to enable multiple users to participate to a conference. Such conference system typically comprises a central server and multiple conference units for the users. The conference units are installed on or integrated in the user desks present in the conference room. The conference units are coupled to the central server via a network, for instance a wireless network, that enables bi-directional transfer of signals.

### Background of the Invention

Conference rooms are often equipped with conference systems enabling a large number of users, for instance tens up to hundreds of users, to participate to a single conference. A conference system typically comprises a central server and a plurality of conference units coupled to the central server via a network. A separate conference unit may for instance be provided for each user, or a conference unit may be shared by two users at neighbouring seats in the conference room. Each conference unit typically has a microphone and a loudspeaker. Each conference unit further has a controller, a data processor and a transceiver configured for bi-directional transfer of signals to/from a similar transceiver in the central server. The transceiver of a conference unit comprises a transmitter able to upstream transmit a speaker signal, i.e. the signal captured by its microphone, to the receiver that forms part of the transceiver in the central server. Similarly, the transceiver of the central server comprises a transmitter able to downstream transmit a mix signal composed of processed speaker signals received from a subset of conference units to the receivers that form part of the transceivers of the conference units.

In a typical situation, a few microphones of a few conference units are open at a time. A user can for instance press a button on his conference unit to open the microphone or to send a request to open the microphone to a moderator which then controls opening the user's microphone. The loudspeaker of each conference unit emits sound corresponding to the received mix signal. This mix signal is composed at the central server and typically combines the speaker signals received from all conference units with open microphone. Combining the speaker signals of open microphones into a mix signal involves processing of these speaker signals like automatic gain control (AGC), automatic gain reduction (AGR), equalizing, filtering, etc. The processing may be dynamic. As an example, the processing of a speaker signal received from a conference unit with open microphone may vary in time depending on the total amount of simultaneous open microphones, the level of the speaker signal received from other conference units with open microphones, etc. Hence, the mix signal received by all conference units comprises contributions of speaker signals of a subset of conference units, more particularly the conference units with open microphones. The contributions of the respective speaker signals in the mix signal are a result of processing at the central server that may be dynamic in time.

The central server processes received audio packets, mix them with other audio input sources, and downstream distributes the processed audio to all conference units in the conference room for playout via the loudspeaker. A conference unit with open microphone consequently shall receive the mix signal and shall output this mix signal via its loudspeaker. The presence of an open microphone at close distance to the loudspeaker can cause acoustic feedback from the conference unit's loudspeaker to its microphone, finally resulting in hauling or whistling, also known as the Larsen effect: the sound outputted by the loudspeaker is received by the microphone which amplifies the sound and re-transmits the sound (via the central server composing the mix signal) again to the loudspeaker to be outputted, and so on.

To avoid acoustic feedback or the Larsen effect, the loudspeaker of a conference unit can be muted whenever its microphone is open. Muting of the loudspeaker however prevents users to receive an amplified sound from other speakers as long as its own microphone is open. This is disadvantageous in large conference rooms where the distance between simultaneous speakers may be large or in situations where speakers do not explicitly request to open their microphones but have them open all the time. Muting the loudspeakers of conference units with open microphones thus has a negative impact on the user experience: what is said by one speaker may not be understood by another speaker.

An alternative to muting loudspeakers, acoustic feedback can be supressed by the so-called mix-minus solution. In the mix-minus solution, the central server composes a signal that combines the speaker signals of all conference units with open microphones without the speaker signal of one conference unit and downstream transmits this so-called mix-minus signal to the latter conference unit. Obviously, a different mix-minus signal must be generated for each conference unit with open microphone and all these different mix-minus signals must be downstream transmitted by the central server. In terms of processing power, the mix-minus solution puts a heavy burden on the central server. In addition, the downstream bandwidth requirements for the network may become unacceptably high. In an example situation wherein the conference units are coupled to the central server via a wireless network, for instance a Wi-Fi network, and wherein eight conference units simultaneously have their microphones open, eight Wi-Fi channels would be required for downstream transmission of the eight different mix-minus signals in addition to the eight Wi-Fi channels required for upstream transmission of the speaker signals. In particular in wireless conference systems with a limited number of channels, the mix-minus solution therefore may be impossible. Bandwidth could be made available through compression of the audio signals but each compression technique will come at the price of reduced audio quality and increased latency.

It is an object of the present invention to disclose an improved conference system that avoids one or several drawbacks of the above-identified existing solutions. More particularly, it is an object to provide a conference system wherein hauling due to the Larsen effect is suppressed with reduced processing requirements for the central server and/or reduced bandwidth requirements for the network, and without negatively impacting the user experience by muting their loudspeakers.

### Summary of the Invention

According to embodiments of the present invention, the above-defined object is achieved by the conference system adapted to enable a plurality of users to participate to a conference in a conference room as defined by claim 1, the conference system comprising:
- a central server;
- a plurality of conference units, wherein a conference unit comprises a microphone and a loudspeaker; and
- a network coupling the conference units to the central server such that a conference unit can upstream transmit a speaker signal captured by its microphone to the central server,
   wherein the central server is configured to generate a mix signal comprising contributions of speaker signals from a subset of said conference units, and to downstream transmit the mix signal to the conference units, and
   wherein the conference system comprises at least one conference unit configured to subtract from the mix signal an estimated contribution of its own speaker signal to thereby generate a loudspeaker signal comprising contributions of speaker signals from the subset of conference units minus itself for output by its loudspeaker.

Thus, according to embodiments of the invention, a conference unit generates or obtains an estimate of its own contribution in the mix signal received from the central server, and subtracts that estimated contribution of its own speaker signal from the received mix signal to obtain a signal for output by its loudspeaker wherein its own speaker signal is absent or presence of its own speaker signal is minimised. The estimated contribution of its own speaker signal must of course account for all processing that took place at the central server side when generating the mix signal, for instance the automatic gain control (AGC), automatic gain reduction (AGR), equalizing, filtering, etc., applied by the central server on the conference unit's speaker signal when generating the mix signal. One way to realize this, could for instance rely on the central server reporting to the conference unit the processor parameter values, for instance the settings of its automatic gain controller, automatic gain reducer, equalizer, filter, etc. Alternatively, the conference unit could for instance estimate these settings through machine learning or artificial intelligence. As the processing may be dynamic over time, also the estimate of the own contribution in the mix signal may be dynamic. Subtracting the estimate of its own contribution from the mix signal further must account for the time shift between the speaker signal being upstream transmitted by the conference unit and the mix signal comprising a contribution of that speaker signal being received by the conference unit. In other words, the conference unit must apply a time correction when subtracting its estimated own contribution from the mix signal. This may for instance be realised by measuring the round-trip time (abbreviated RTT) for signals travelling back and forth between the conference unit and central server, and using that RTT as delay for subtracting the estimated own speaker contribution from the received mix signal.

As the contribution of its own speaker signal is removed from or minimized in the outputted loudspeaker signal, the Larsen effect is mitigated and hauling or whistling of the conference unit is supressed. This is realized by the invention in a manner that does not impact the network or central server resources. At the central server, a single mix signal can be generated comprising contributions of all conference units with open microphones, and this single same mix signal can be broadcasted to all conference units via one downstream channel. The invention shifts the burden for processing the mix signal to mitigate the Larsen effect to the conference units. The central server does not have to generate separate mix-minus signals for the different conference units, the network does not require capacity to downstream convey these mix-minus signals, and the conference units with open microphone do not have to mute their loudspeakers.

In embodiments of the conference system according to the present invention, as defined by claim 2, the network is a wireless network.

Indeed, the present invention is particularly advantageous when the network coupling the conference units to the central server is a wireless network, for instance a Wi-Fi network. Such a wireless network has a limited amount of channels that each have a limited capacity. In embodiments of the present invention, typically only one channel will be required to downstream transmit the mix signal to all conference units. On the contrary, prior art implementations that compose mix-minus signals at the central server for all conference units with open microphones require as many downstream channels as there are open microphones because each mix-minus signal shall typically occupy a different downstream channel. In addition thereto a mix signal comprising contributions from all conference units with open microphones must still be downstream transmitted via yet another channel to all conference units whose microphones are not open.

In embodiments of the conference system according to the present invention, as defined by claim 3, the at least one conference unit comprises:
- a memory configured to store a portion of its speaker signal, the portion having a length equal to or larger than the round-trip time of the network; and
- an adaptive filter configured to receive the mix signal and the portion of the speaker signal, and to generate therefrom the loudspeaker signal wherein the energy level of the speaker signal is minimized.

Whereas a straightforward implementation of the present invention relies on the central server communicating its processing parameters to the conference units to enable each conference unit with open microphone to calculate the contribution of its own speaker signal in the received mix signal and subtract it from the mix signal, or to apply a filter with the same parameters as the ones used by the central server, a more preferred implementation relies on the conference unit memorizing portions of its own speaker signal and sending the memorized own speaker signal through an adaptive filter that estimates and tracks the dynamically varying parameters in the path followed by the speaker signal. The length of the memorized speaker signal portion shall preferably correspond to the round-trip time of the speaker signal, i.e. the time it takes for the speaker signal to upstream travel to the central server and to be processed by the central server, plus the time it takes for the mix signal to downstream travel. The adaptive filter, for instance a Least Mean Square filter, abbreviated LMS filter, for example a Normalized Least Mean Square filter, abbreviated NLMS filter, uses the memorized speaker signal portion to generate a signal that will be subtracted from the received mix signal thereby generating an output signal that is supplied to the conference unit's loudspeaker. The taps of the adaptive filter are automatically adapted to minimize the energy of the speaker signal in the output signal. This is done by a filter coefficient update mechanism that receives as input the difference between the signal outputted by the filter and the mix signal received.

In embodiments of the conference system according to the present invention, as defined by claim 4, the adaptive filter comprises a Finite Impulse Response filter, abbreviated a FIR filter.

Indeed, in preferred embodiments of the invention, the adaptive filter is a Finite Impulse Response filter, abbreviated FIR filter. Such filter will automatically adapt its taps to minimize the energy of the speaker signal in the mix signal. The taps will adapt automatically to any dynamics in the processing of the speaker signal by the central server, and will automatically regulate the timing to synchronize subtraction of the estimated contribution of a memorized speaker signal portion from the mix signal with receipt of the corresponding part of the mix signal, i.e. the part of the mix signal that contains a contribution of that speaker signal portion.

In embodiments of the conference system according to the present invention, as defined by claim 5, the FIR filter has at most 40 taps, preferably at most 20 taps.

Indeed, to restrict the processing requirements for the conference unit, the FIR filter is configured to have at most 40 taps, preferably at most 20 taps.

In embodiments of the conference system according to the present invention, as defined by claim 6, the coefficients of the FIR filter are calculated using a Least Mean Square algorithm, abbreviated LMS algorithm.

Indeed, when the speaker signal is used as input signal for an LMS algorithm, for example the NLMS algorithm, and the received mix signal is used as reference signal for the LMS or NLMS algorithm, then the error signal of the LMS or NLMS algorithm that is used by the filter update mechanism of the LMS/NLMS algorithm can be used as loudspeaker signal, i.e. mix signal wherein the presence of contributions from the speaker signal is minimised through adaptive tuning of the filter coefficients of a FIR filter.

According to a second aspect, as defined by claim 7, the present invention concerns a method to reduce acoustic feedback in a conference system adapted to enable a plurality of users to participate to a conference in a conference room, the conference system comprising:
- a central server;
- a plurality of conference units, wherein a conference unit comprises a microphone and a loudspeaker; and
- a network coupling the conference units to the central server such that a conference unit can upstream transmit a speaker signal captured by its microphone to the central server,
the method comprising the steps of:
- generating by the central server a mix signal comprising contributions of speaker signals from a subset of the conference units;
- downstream transmitting the mix signal to the conference units; and
- subtracting by at least one conference unit from the mix signal an estimated contribution of its own speaker signal to thereby generate a loudspeaker signal comprising contributions of speaker signals from the subset of conference units minus itself for output by its loudspeaker.

### Brief Description of the Drawings

Fig. 1 schematically shows an embodiment of a wireless conference system 100;
Fig. 2 is a functional block scheme of a prior art conference system 200 wherein loudspeakers 231, 233 of conference units 211, 213 with open microphones 221, 223 are muted;
Fig. 3 is a functional block scheme of another prior art conference system 300 wherein mix-minus signals 351, 353 are generated for conference units 311, 313 with open microphones 321, 323;
Fig. 4 is a functional block scheme of an embodiment of the conference system 400 according to the present invention;
Fig. 5 is a functional block scheme of a conference unit 511 used in an embodiment of the conference system according to the present invention; and
Fig. 6 shows an example embodiment of a suitable computing system 600 for performing one or several steps in embodiments of the conference system according to the invention.

### Detailed Description of Embodiment(s)

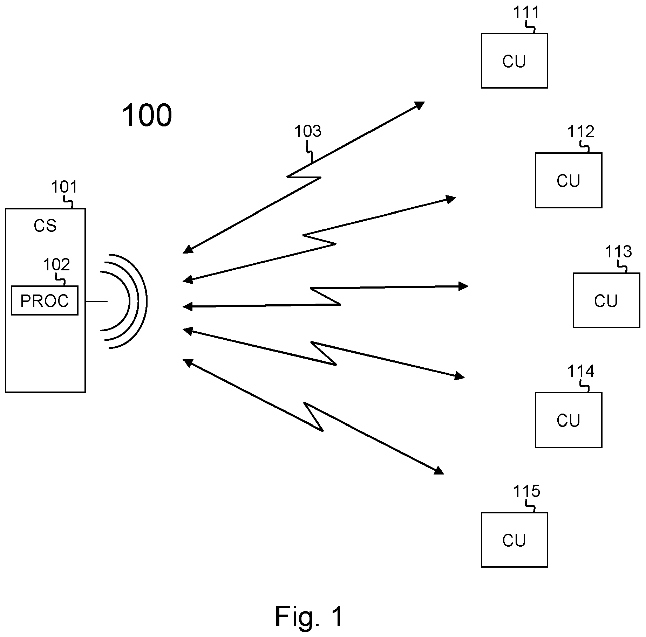

Fig. 1 shows a wireless conference system comprising a central server CS or 101 and five conference units CU, 111-115 coupled to the central server 101 via a bidirectional wireless network 103. The conference units 111-115 capture audio signals from respective conference participants via a microphone, digitize the audio signal into audio data packets, and upstream transmit the audio data packets to the central server 101. The central server 101 receives audio packets from one or several conference units with open microphones and processes the audio packets in processor PROC or 102, thereby generating new audio packets for downstream distribution to the conference units 111-115 such that the conference units 111-115 receive an audio stream comprising either the processed audio signal generated by a single, selected conference unit (the selection may be made by the central server 101, a chairperson, a moderator upon receipt of a request from a conference unit), or the combined processed audio signals generated by plural, selected conference units (again, the selection of conference units may be made by the central server 101, a chairperson, a moderator upon receipt of a request from a conference unit). The received downstream signal is outputted by each of the conference units 111-115 via a loudspeaker. In the embodiment of Fig. 1, the conference units 111-115 communicate wirelessly and bidirectionally with central server 101 using Wi-Fi. Obviously, variant embodiments relying on other wireless communication protocols can be deployed, and the technique according to the present invention can also be deployed if a wired network is coupling the conference units to a central server, with similar advantages.

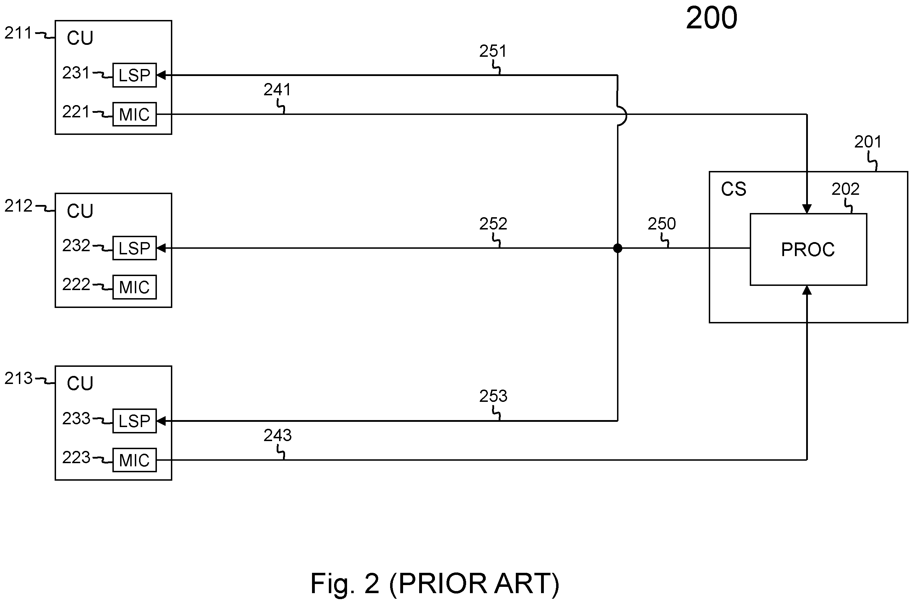

Fig. 2 shows a conference system 200 operating according to a first prior art solution. The drawing shows 3 conference units 211, 212, 213 coupled to central server 201. The conference units 211, 212 and 213 comprise respective microphones MIC denoted 221, 222, 223 and respective loudspeakers LSP, denoted 231, 232 and 233. The central server 201 comprises a processor 202. Fig. 2 illustrates a point in time where the first conference unit 211 and third conference unit 213 have their microphones open. Consequently, microphone 221 transmits a first speaker signal 241 to central server 201 and microphone 223 transmits a second speaker signal 243 to central server 201. The two speaker signals 241 and 243 are processed by processor 202 and the processed signals are combined into a mix signal 250 that is downstream transmitted from the central server 201 to all conference units 211, 212, 213. The mix signals 251, 252 and 253 received by the different conference units 211, 212, 213 may be assumed identical (except for possible transmission errors) to the mix signal 250 generated and transmitted by the central server 201. These received mix signals 251, 252, 253 are supplied to the respective loudspeakers 231, 232, 233 to be outputted. However, in order to avoid acoustic feedback from the loudspeakers 231 and 233 to the respective open microphones 221 and 223, the loudspeakers 231 and 233 are muted. Hence, only loudspeaker 232 in conference unit 212 with closed microphone 222 outputs the received mix signal 252.

The muting of loudspeakers 231 and 233 in the conference system 200 is not beneficial because the users of conference units 211 and 213 cannot hear amplified sound from other conference units with open microphones: the user of conference unit 231 cannot hear an amplified sound of conference unit 233 and vice versa, the user of conference unit 233 cannot hear an amplified sound of conference unit 231. Users of conference units with open microphones cannot hear the mix signal via their own loudspeaker. They can at best hear the mix signal via loudspeakers of neighbouring conference units that are possibly located at a distance in the conference room as a result of which the mix signal may be inaudible or incomprehensible for them.

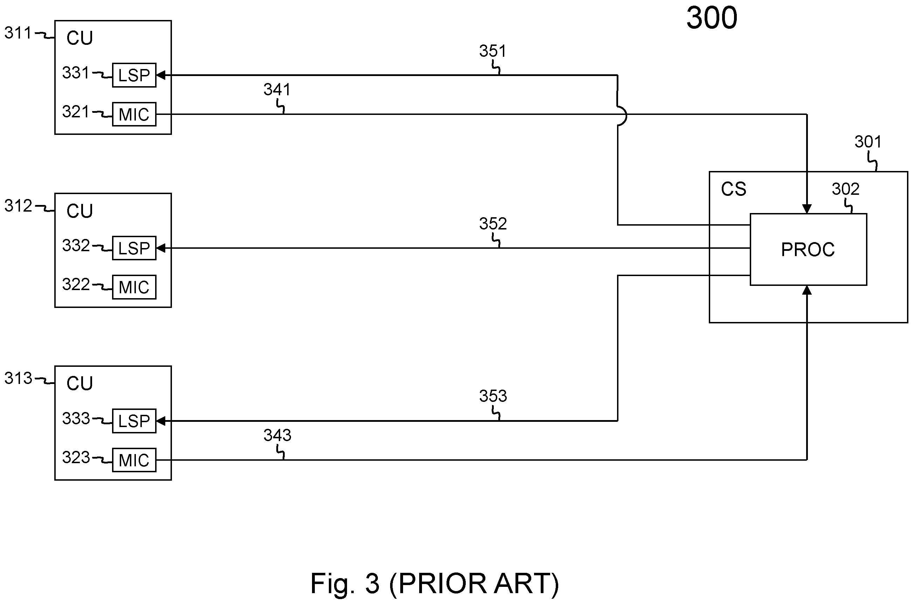

Fig. 3 shows a conference system 300 operating according to a second prior art solution. The drawing again shows 3 conference units 311, 312, 313 coupled to central server 301. The conference units 311, 312 and 313 comprise respective microphones MIC denoted 321, 322, 323 and respective loudspeakers LSP, denoted 331, 332 and 333. The central server 301 comprises a processor 302. Fig. 3 illustrates a point in time where the first conference unit 311 and third conference unit 313 have their microphones open. Consequently, microphone 321 transmits a first speaker signal 341 to central server 301 and microphone 323 transmits a second speaker signal 343 to central server 301. The two speaker signals 341 and 343 are processed by processor 302. The latter processor thereupon generates a mix signal 352 wherein the processed speaker signals 341 and 343 are combined, generates a first mix-minus signal 351 that comprises the processed speaker signal 343 but not processed speaker signal 341, and generates a second mix-minus signal 353 that comprises the processed speaker signal 341 but not processed speaker signal 343. The first mix-minus signal 351, the mix signal 352 and the second mix-minus signal 353 are downstream transmitted to respective conference units 311, 312, 313. These received mix-minus signal 351, mix signal 352, and mix-minus signal 353 are supplied to the respective loudspeakers 331, 332, 333 and outputted. As the first mix-minus signal 351 outputted by loudspeaker 331 of conference unit 311 contains no contribution of its own speaker signal 341, acoustic feedback between loudspeaker 331 and microphone 321 is avoided. The same holds true for the loudspeaker 333 and microphone 323 of the third conference unit 313 that also receives a mix-minus signal 353 that contains no contribution of its own speaker signal 343. As microphone 322 of conference unit 312 is closed, acoustic feedback between loudspeaker 332 and microphone 322 is not possible.

Although the problem of acoustic feedback is solved in the second prior art solution illustrated by Fig. 3, the mix-minus solution deployed therein is not beneficial because it puts a high processing burden on the central server's processor 302 - three different signals 351, 352, 353 must be generated - and the downstream bandwidth usage to transfer the three different signals 351, 352, 353 may be assumed a threefold of the capacity required to downstream broadcast a single mix signal to all conference units as was done in the prior art solution illustrated by Fig. 2.

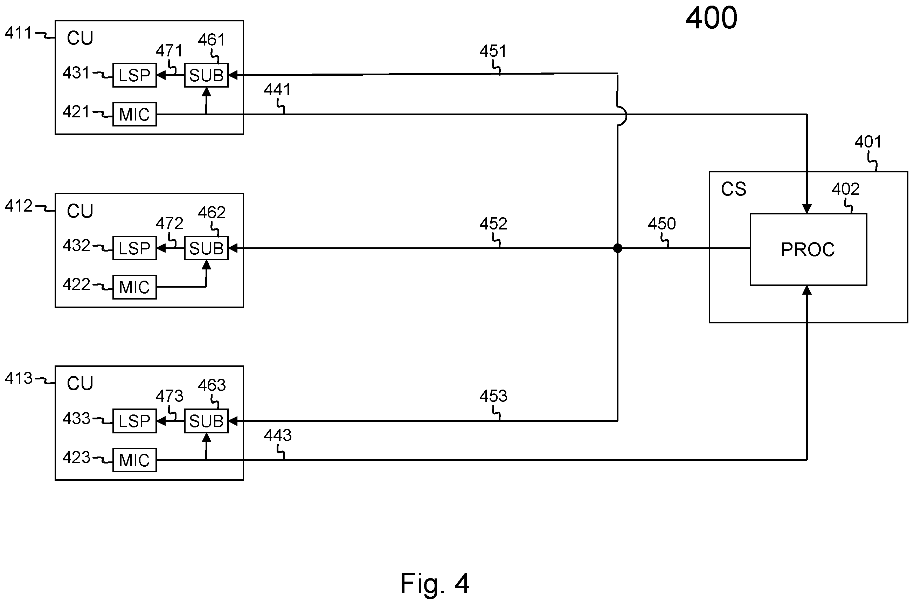

Fig. 4 shows an embodiment of the conference system 400 according to the present invention. The drawing again shows 3 conference units 411, 412, 413 coupled to central server 401. The conference units 411, 412 and 413 comprise respective microphones MIC denoted 421, 422, 423 and respective loudspeakers LSP, denoted 431, 432 and 433. The conference units 411, 412 and 413 further each comprise a subtraction unit SUB denoted 461, 462 and 463. The central server 401 comprises a processor 402. Fig. 4 illustrates a point in time where the first conference unit 411 and third conference unit 413 have their microphones open. Consequently, microphone 421 transmits a first speaker signal 441 to central server 401 and microphone 423 transmits a second speaker signal 443 to central server 401. The two speaker signals 441 and 443 are processed by processor 402 and the processed signals are combined into a mix signal 450 that is downstream transmitted from the central server 401 to all conference units 411, 412, 413. The mix signals 451, 452 and 453 received by the different conference units 411, 412, 413 are assumed identical (except for possible transmission errors) to the mix signal 450 generated and transmitted by the central server 401.

These received mix signals 451, 452, 453 are supplied to the respective subtraction units 461, 462, 463 before being outputted by loudspeakers 431, 432, 433 to be outputted. The subtraction units 461, 462, 463 receive the speaker signal generated by the conference unit where they form part of as input. Subtraction unit 461 hence receives speaker signal 441 from microphone 421 as input, subtraction unit 462 receives no speaker signal as input because microphone 422 is closed, and subtraction unit 463 receives speaker signal 443 from microphone 423 as input. A subtraction unit uses that speaker signal to estimate the contribution of that speaker signal in the received mix signal and to subtract that estimated contribution of its own speaker signal from the received mix signal, thereby generating a loudspeaker signal wherein the energy of its own speaker signal is minimized. When this loudspeaker signal is outputted by the loudspeaker, the risk for acoustic feedback between the loudspeaker and microphone of the same conference unit is minimised. In the example of Fig. 4, subtraction unit 461 receives speaker signal 441 as input, estimates the contribution of speaker signal 441 in the received mix signal 451, subtracts that estimated contribution from mix signal 451 to generate loudspeaker signal 471 wherein the energy resulting from speaker signal 441 is minimized, thereby avoiding acoustic feedback between loudspeaker 431 and microphone 421 of conference unit 411. The loudspeaker signal 471 outputted by loudspeaker 431 ideally contains only a contribution from speaker signal 443, i.e. from all open microphones except the microphone of conference unit 411. Similarly, subtraction unit 463 receives speaker signal 443 as input, estimates the contribution of speaker signal 443 in the received mix signal 453, subtracts that estimated contribution from mix signal 453 to generate loudspeaker signal 473 wherein the energy resulting from speaker signal 443 is minimized, thereby avoiding acoustic feedback between loudspeaker 433 and microphone 423 of conference unit 413. The loudspeaker signal 473 outputted by loudspeaker 433 ideally contains only a contribution from speaker signal 441, i.e. from all open microphones except the microphone of conference unit 413. As microphone 422 in conference unit 412 generates no speaker signal (the microphone is closed), subtraction unit 462 does not subtract any contribution from received mix signal 452 as a result of which loudspeaker signal 472 contains contributions from both speaker signals 441 and 443, i.e. from all open microphones.

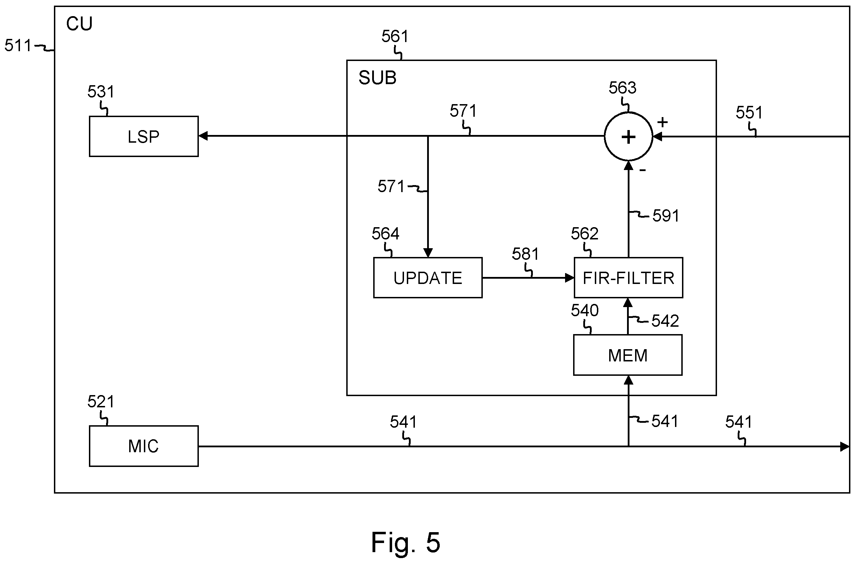

Fig. 5 is a functional block scheme of a conference unit 511 used in an embodiment of the conference system according to the present invention. More particularly, Fig. 5 illustrates in more detail a possible implementation of the subtraction units 461, 462, 463 of Fig. 4. Conference unit 511 comprises a microphone 521, a loudspeaker 531, and a subtraction unit 561. In the situation depicted by Fig. 5, microphone 521 is open and generates a speaker signal 541 that is upstream transmitted for processing by a central server of a conference system not drawn in Fig. 5. The speaker signal 541 is also supplied to the subtraction unit 561. This subtraction unit 561 comprises a memory 540, a FIR filter 562, a signal adder 563, and a coefficient updater 564. Memory 540 subsequently stores portions of speaker signal 541. The stored portions have a length approximately equal to the round-trip time of the conference system, i.e. the time it takes for speaker signal 541 to travel to the central server, to be processed by the central server, and to return to conference unit 511 as part of mix signal 551. A stored portion 542 of speaker signal 541 is supplied to FIR filter 562. The latter FIR filter 562 generates an estimated contribution 591 of the speaker signal 541 in received mix signal 551, and signal adder 563 subtracts this estimated contribution 591 from received mix signal 551, thereby generating a loudspeaker signal 571 that is supplied to loudspeaker 531 to be outputted. The FIR filter coefficients or taps thus must be set to compensate for the processing that speaker signal 541 undergoes in the central server and to compensate for the delay resulting from the transmission and processing of speaker signal 541. This is realised by adaptively updating the filter coefficients of FIR filter 562. This task is executed by coefficient updater 564 which receives as input the loudspeaker signal 571 generated by signal adder 563, and which calculates updates for the filter coefficients 581 of FIR filter 562 that minimize the energy of speaker signal 541 in loudspeaker signal 571. The coefficient updater 564 thereto for instance applies the gradient descent algorithm. The FIR filter 562, signal adder 563 and coefficient updater 564 jointly form an adaptive filter that operates according to the known NMLS (Normalised Least Mean Squares) algorithm to minimize the energy of speaker signal 541 in loudspeaker signal 571. The NLMS algorithm in other words estimates and tracks the varying parameters in the speaker signal path. In an example implementation of such adaptive filter, the number of filter taps is set equal to 16. It is noted that the use of an NLMS filter is only given by way of example. Alternative adaptive filters could be deployed in variant embodiments of the invention with equal or similar benefits.

It is noted that alternative implementations of the subtraction units 461, 462, 463 exist. In an alternative implementation, the central server of the conference system for example may communicate to the conference units with open microphone the parameter values used to process their speaker signal when generating the mix signal. These parameter values encompass for instance the AGC settings, AGR settings, equalizer settings, filter settings, etc. Knowledge of these parameter values at the conference unit allows the subtraction unit to estimate the contribution of its own speaker signal in the received mix signal by sending its own speaker signal through a signal processor with the same parameter values as the ones used by the central server. The estimated contribution, when time-corrected to compensate for the round-trip time, can then be subtracted from the received mix signal to generate a loudspeaker signal that will not result in acoustic feedback when outputted by the loudspeaker.

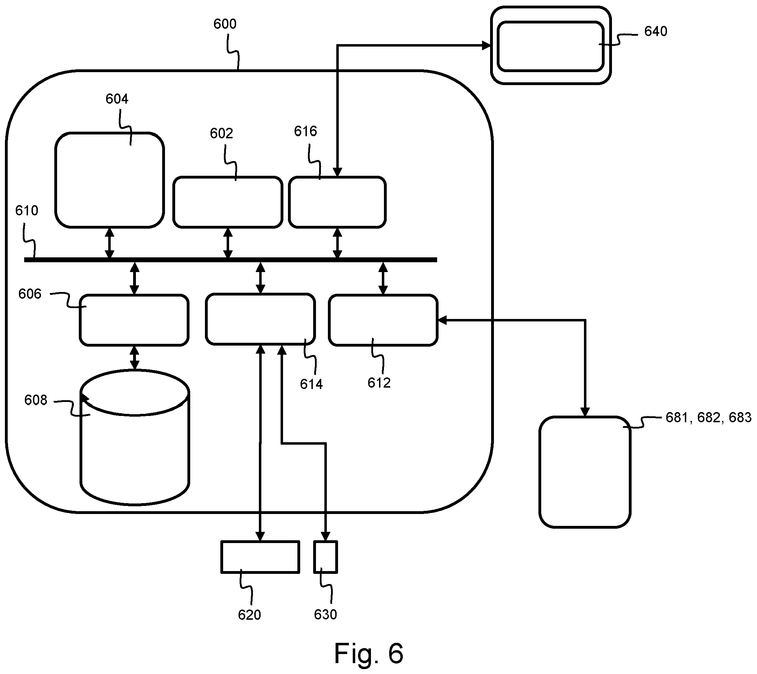

Fig. 6 shows a suitable computing system 600 enabling to perform one or several steps in embodiments of the conference system according to the invention. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 681, 682, 683. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, -ROM disk, solid state drives, flash memory cards, ... could be used. Computing system 600 could thus correspond to the processing circuitry 402 in the central server or the subtraction units 461, 462, 463 in the conference units 411, 412, 413 in the embodiment illustrated by Fig. 4, or the subtraction unit 511in the embodiment illustrated by Fig. 5.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A conference system (400) adapted to enable a plurality of users to participate to a conference in a conference room, said conference system (400) comprising:
- a central server (401);
- a plurality of conference units (411, 412, 413; 511), wherein a conference unit (411, 412, 413; 511) comprises a microphone (421, 422, 423; 521) and a loudspeaker; (431, 432, 433; 531) and
- a network (103) coupling said conference units (411, 412, 413; 511) to said central server (401) such that a conference unit (411, 413) can upstream transmit a speaker signal (441, 443) captured by its microphone (421, 423) to said central server (401),
wherein said central server (401) is configured to generate a mix signal (450) comprising contributions of speaker signals (441, 443) from a subset of said conference units (411, 413), and to downstream transmit said mix signal (450) to said conference units (411, 412, 413; 511),
**CHARACTERIZED IN THAT** said conference system (400) comprises at least one conference unit (411, 413; 511) configured to subtract from said mix signal (451, 453; 551) an estimated contribution (591) of its own speaker signal (441, 443; 541) to thereby generate a loudspeaker signal (471, 473; 571) comprising contributions of speaker signals (441, 443; 541) from said subset of conference units (411, 413; 511) minus itself for output by its loudspeaker (431, 433; 531).

2. A conference system (400) according to claim 1,
wherein said network (103) is a wireless network.

3. A conference system (400) according to one of the preceding claims,
wherein said at least one conference unit (511) comprises:
- a memory (540) configured to store a portion of its speaker signal (541), said portion having a length equal to or larger than the round-trip time of said network (103); and
- an adaptive filter (562, 563, 564) configured to receive said mix signal (551) and said portion of said speaker signal (542), and to generate therefrom said loudspeaker signal (571) wherein the energy level of said speaker signal (541) is minimized.

4. A conference system (400) according to claim 3,
wherein said adaptive filter (562, 563, 564) comprises a Finite Impulse Response filter (562), abbreviated a FIR filter.

5. A conference system (400) according to claim 4,
wherein said FIR filter (562) has at most 40 taps, preferably at most 20 taps.

6. A conference system (400) according to claim 4 or claim 5,
wherein the coefficients of said FIR filter (562) are calculated using a Least Mean Square algorithm, abbreviated LMS algorithm.

7. A method to reduce acoustic feedback in a conference system (400) adapted to enable a plurality of users to participate to a conference in a conference room, said conference system (400) comprising:
- a central server (401);
- a plurality of conference units (411, 412, 413; 511), wherein a conference unit (411, 412, 413; 511) comprises a microphone (421, 422, 423; 521) and a loudspeaker; (431, 432, 433; 531) and
- a network (103) coupling said conference units (411, 412, 413; 511) to said central server (401) such that a conference unit (411, 413) can upstream transmit a speaker signal (441, 443) captured by its microphone (421, 423) to said central server (401),
said method comprising the steps of:
- generating by said central server (401) a mix signal (450) comprising contributions of speaker signals (441, 443) from a subset of said conference units (411, 413); and
- downstream transmitting said mix signal (450, 451, 452, 453; 551) to said conference units (411, 412, 413; 511),
**CHARACTERIZED IN THAT** said method further comprises:
- subtracting by at least one conference unit (411, 413) from said mix signal (451, 453; 551) an estimated contribution (591) of its own speaker signal (441, 443; 541) to thereby generate a loudspeaker signal (471, 473; 571) comprising contributions of speaker signals (441, 443; 541) from said subset of conference units (411, 413; 511) minus itself for output by its loudspeaker (431, 433; 531).
